# FASCICULE DE BREVET EUROPEEN

(11) **EP 2 498 353 B1**
(45) Date de publication et mention de la délivrance du brevet: **18.02.2015**
(21) Numéro de dépôt: 12158859.4
(22) Date de dépôt: 09.03.2012
(51) Int. Cl.: H02B 1/052

(54) **Appareil électrique à fixer par encliquetage sur un rail de support horizontal**
Elektrogerät zum Befestigen durch Einrasten auf einer waagrechten Halterungsschiene
Electrical device to be attached by snap fitting to a horizontal support rail

(30) Priorité: 11.03.2011 FR 1152021
(43) Date de publication de la demande: 12.09.2012
(73) Titulaire: Legrand France, 87000 Limoges (FR); Legrand SNC, 87000 Limoges (FR)
(72) Inventeur: Lipari, Jean-Pierre, 06600 ANTIBES (FR)
(74) Mandataire: Santarelli

(56) Documents cités:
- EP-A1- 1 058 360
- EP-A1- 1 587 189
- EP-A1- 2 053 910
- DE-A1- 4 107 075
- DE-B3- 10 220 821

## Description

### DOMAINE DE L'INVENTION

L'invention a trait aux appareils électriques à fixer par encliquetage sur un rail de support horizontal présentant une aile supérieure et une aile inférieure.

### ARRIERE PLAN TECHNOLOGIQUE

En général, de tels appareils électriques présentent sur une face arrière un bec supérieur et un bec inférieur en regard l'un de l'autre et sont configurés pour être fixés au rail avec l'aile supérieure engagée entre le bec supérieur et le corps de l'appareil et avec l'aile inférieure engagée entre le bec inférieur et le corps de l'appareil, le bec inférieur étant élastiquement rétractable pour permettre la fixation de l'appareil sur le rail par encliquetage.

On connaît déjà, notamment par la demande de brevet allemand DE 41 07 075, par la demande de brevet allemand DE 44 39 672, par la demande de brevet européen EP 1 058 360 et par la demande de brevet européen EP 2053910 de tels appareils dans lesquels le bec inférieur fait partie d'une griffe admettant une position de service pour la fixation de l'appareil sur le rail et une position effacée pour la libération de l'appareil dudit rail, position effacée dans laquelle la griffe est abaissée par rapport à la position de service.

La position effacée de la griffe est particulièrement utile dans les pays, tels que l'Allemagne, dans lesquels la pratique est d'alimenter les différents appareils fixés côte à côte sur le rail par un peigne de distribution de l'énergie électrique disposé horizontalement sous les appareils avec les dents du peigne engagées chacune dans une fente étroite ménagée dans la face inférieure des appareils pour rejoindre une borne de raccordement interne à l'appareil.

Un tel peigne est en général rigide, de sorte que pour libérer l'un des appareils de la rangée, sans démonter le peigne, il est nécessaire de pouvoir élever l'appareil par rapport au peigne de la hauteur des dents.

Du fait que l'orifice par lequel chaque dent du peigne pénètre dans l'appareil est une fente étroite dont la largeur correspond à la largeur des dents du peigne, il n'est pas possible de faire avancer l'appareil pour le libérer de l'aile inférieure du rail, quand la griffe est en position de service.

La position abaissée de la griffe permet d'élever l'appareil de la quantité voulue sans être gêné par le rail de fixation.

### OBJET DE L'INVENTION

L'invention vise à fournir un appareil semblable dont la griffe soit fiable tout en étant simple, commode et économique.

L'invention propose à cet effet un appareil électrique à fixer par encliquetage sur un rail de support horizontal présentant une aile supérieure et une aile inférieure, lequel appareil présente sur une face arrière un bec supérieur et un bec inférieur en regard l'un de l'autre, ledit appareil étant configuré pour être fixé audit rail avec ladite aile supérieure engagée entre le bec supérieur et le corps de l'appareil et avec ladite aile inférieure engagée entre le bec inférieur et le corps de l'appareil, ledit bec inférieur étant élastiquement rétractable pour permettre la fixation de l'appareil sur le rail par encliquetage, ledit bec inférieur faisant partie d'une griffe admettant une position de service pour la fixation de l'appareil sur le rail et une position effacée, pour la libération de l'appareil dudit rail, dans laquelle la griffe est abaissée par rapport à la position de service ; la griffe comportant un chariot d'une seule pièce comportant un châssis et un cliquet présentant en l'absence de sollicitation une position de repos à partir de laquelle il peut fléchir élastiquement, ledit chariot étant monté, par ledit châssis, coulissant sur le corps de l'appareil entre une positon haute où la griffe est en position de service et une position basse où la griffe est en position effacée, ledit cliquet et le corps de l'appareil étant configurés pour que le chariot soit bloqué vis-à-vis du corps de l'appareil en position haute lorsque le cliquet est en position de repos et pour que le chariot soit débloqué vis-à-vis du corps de l'appareil lorsque le chariot est en position haute et que le cliquet est dans une position fléchie, le chariot pouvant alors être abaissé jusqu'à sa position basse ;
caractérisé en ce que ladite griffe comporte un coulisseau distinct du chariot, monté coulissant dans ledit chariot, l'extrémité supérieure dudit coulisseau formant ledit bec inférieur.

Le chariot que comporte la griffe de l'appareil selon l'invention comporte, d'une seule pièce, un châssis par lequel le chariot est monté coulissant sur le corps de l'appareil et un cliquet permettant de bloquer la griffe en position de service et de la débloquer pour qu'elle puisse être abaissée jusqu'à la position effacée.

Du fait que le châssis servant au montage à coulissement sur le corps de l'appareil et le cliquet font partie d'une même pièce, le positionnement du cliquet par rapport au corps de l'appareil est particulièrement précis, au bénéfice de la qualité et de la fiabilité de la coopération entre le corps de l'appareil et le chariot.

Enfin, d'une manière générale, la griffe de l'appareil selon l'invention présente un agencement permettant sa mise en oeuvre de façon simple, commode et économique.

Selon des caractéristiques préférées, l'appareil comporte un ressort distinct du chariot et du coulisseau, disposé entre ledit coulisseau et ledit cliquet du chariot.

Du fait que le coulisseau est distinct du chariot et que le ressort est distinct du chariot et du coulisseau, le chariot et le coulisseau peuvent chacun jouer leur rôle en toute indépendance, au bénéfice de la qualité et de la fiabilité du fonctionnement.

Au surplus, du fait que le ressort est distinct du chariot et du coulisseau, il peut être dans une matière différente.

En particulier, le chariot et le coulisseau peuvent être en matière plastique alors que le ressort est en métal, au bénéfice de la durabilité de son action (un ressort en matière plastique devient cassant avec le temps).

Selon des caractéristiques préférées de la griffe de l'appareil selon l'invention :
- ledit coulisseau comporte une longrine à laquelle appartient ledit bec inférieur et comporte une tige centrale saillant vers le bas depuis le côté de la longrine opposé audit bec inférieur; ledit châssis comporte une traverse supérieure présentant un passage pour ladite tige centrale du coulisseau ; ledit cliquet prend racine sur ladite traverse supérieure, à partir de laquelle il s'étend vers le bas ; ledit cliquet comporte une platine et deux joues ayant chacune une extrémité inférieure qui se raccorde à une extrémité supérieure de ladite platine ; et ledit ressort est disposé entre lesdites joues et s'appuie à son extrémité supérieure sur ladite tige centrale du coulisseau et à son extrémité inférieure sur ladite platine du cliquet ;
- ledit cliquet comporte une charnière entre l'extrémité supérieure de chaque dite joue et ladite traverse supérieure ;
- ledit coulisseau comporte une longrine à laquelle appartient ledit bec inférieur et comporte deux bras latéraux saillant vers le bas depuis le côté de la longrine opposé audit bec inférieur ; et ledit châssis comporte deux membres latéraux et une traverse supérieure s'étendant de l'un à l'autre des membres latéraux à leur extrémité supérieure, laquelle traverse supérieure présente un passage pour chaque dit bras latéral du coulisseau ;
- la traverse supérieure comporte une platine située à l'arrière et deux équerres comportant chacune une première branche prenant racine sur la platine et une deuxième branche s'étendant entre la première branche et le membre latéral le plus proche, chaque dit passage pour un bras latéral respectif étant formé par l'espace entouré par une équerre respective, par le membre latéral correspondant et par la platine ;
- ledit coulisseau comporte une tige centrale saillant vers le bas depuis le côté de la longrine opposée audit bec inférieur ; et un espace existant entre les deux équerres formant un passage pour ladite tige centrale ;
- le corps de l'appareil comporte une surface dont saille une patte allongée suivant la direction horizontale ; et le cliquet présente au moins un mentonnet en contact avec ladite patte pour bloquer ledit chariot vis-à-vis du corps de l'appareil en position haute lorsque le cliquet est en position de repos. ;
- un ergot saille vers l'arrière de ladite patte ; et ladite griffe comporte au moins une patte flexible comportant un cran en contact avec ledit ergot lorsque le chariot est en position basse ;
- ladite patte flexible appartient audit coulisseau ;
- ladite patte flexible appartient audit châssis ;
- ledit châssis comporte deux flasques latéraux ayant chacun une extrémité avant formant une nervure longeant une rainure ; la nervure de chaque flasque latéral étant reçu dans une rainure du corps de l'appareil tandis que la rainure de chaque flasque latéral reçoit une nervure du corps de l'appareil ;
- ledit châssis comporte deux flasques latéraux avec lesquels ledit coulisseau est en contact;
- ledit châssis comporte deux flasques latéraux et un longeron à mi-distance entre les flasques latéraux, avec ledit coulisseau qui est au contact du longeron et de l'un des flasques latéraux ;
- ledit cliquet comporte en partie basse une touche de commande située sous le corps de l'appareil lorsque la griffe est en position de service ; et/ou
- ledit chariot est en matière plastique moulée.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés, sur lesquels :
- la figure 1 est une vue en élévation de côté montrant un appareil conforme à l'invention fixé sur un rail de support ;
- la figure 2 est une vue semblable à la figure 1, mais avec la griffe de fixation qui est en position effacée et l'appareil qui est libéré du rail de support et du peigne de distribution d'énergie électrique ;
- la figure 3 est une vue en perspective montrant la partie de l'appareil électrique que l'on voit en bas à droite sur la figure 2, en particulier la griffe de fixation ;
- la figure 4 est une vue en perspective semblable, mais montrant l'appareil sans la griffe de fixation ;
- la figure 5 est une vue semblable à la figure 4, mais en élévation de côté ;
- La figure 6 est une vue en coupe de la partie de l'appareil que l'on voit en bas à droite sur la figure 1, montrant la griffe de fixation en position de service ;
- La figure 7 est une vue en perspective montrant isolément la griffe de fixation, cette vue étant prise sous un angle différent de la vue de la figure 3 ;
- Les figures 8 et 9 sont des vues en perspective prises sous un angle semblable à celui de la figure 7, montrant respectivement le coulisseau et le chariot que comporte la griffe de fixation ;
- La figure 10 est une autre vue en perspective de la griffe de fixation, prise encore sous un autre angle ;
- La figure 11 est une vue en perspective, prise sous le même angle que la figure 10, montrant isolément le charriot de la griffe de fixation ;
- Les figures 12 et 13 sont des vues en perspective semblables respectivement à la figure 3 et à la figure 4 mais pour une variante de l'appareil électrique deux fois plus large ; et
- Les figures 14 et 15 sont des vues en perspective semblables respectivement à la figure 7 et à la figure 9 mais pour la griffe que comporte la variante de l'appareil électrique.

### DESCRIPTION DETAILLEE D'EXEMPLES DE REALISATION

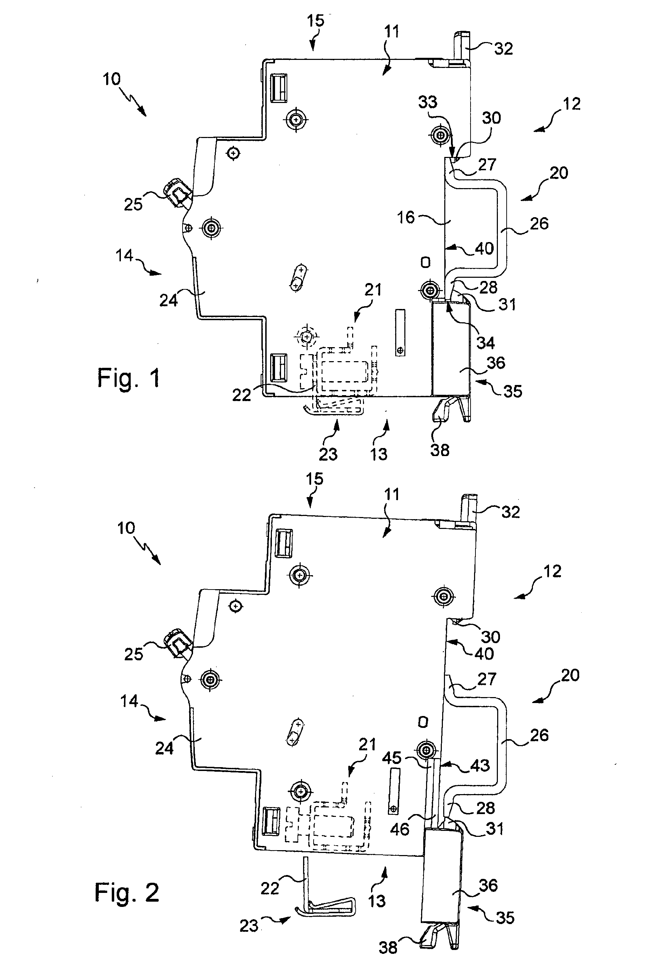

L'appareil électrique 10 illustré sur la figure 1 a une forme globalement parallélépipédique.

Il présente deux faces principales 11 et des faces latérales s'étendant de l'une à l'autre des faces principales 11, à savoir une face arrière 12, une face inférieure 13, une face avant 14 et une face supérieure 15.

La face arrière 12 présente une échancrure 16 pour le montage de l'appareil 1 sur un rail de support normalisé à profil en Ω tel que le rail 20.

La face inférieure 13 présente des orifices d'accès (non représentés) à une borne de raccordement 21. Ici, la borne 21 accueille une dent 22 d'un peigne 23 de distribution de l'énergie électrique.

L'orifice de la face inférieure 13 par lequel la dent 22 est introduite dans l'appareil 10 est une fente étroite dont la largeur (dimension suivant la direction avant-arrière) est légèrement supérieure à l'épaisseur de la dent 22.

La face inférieure 13 présente, en arrière de l'orifice par lequel est introduite la dent 22, un autre orifice d'accès à la borne 21, relativement étendu suivant la direction avant-arrière, permettant d'accueillir l'extrémité dénudée d'un câble électrique.

La face avant 14 présente, en position centrale, sur à peu près la moitié de sa longueur, un nez 24 présentant un levier de manoeuvre 25. Sous le nez 24 se trouve un orifice permettant d'accéder à la tête de la vis de la borne 21.

La face supérieure 15 présente un orifice (non représenté) donnant accès à une borne de raccordement (non représentée) semblable à la borne 21. Ici, cette borne accueille l'extrémité dénudée d'un câble électrique (non représenté) de départ vers un circuit divisionnaire tel qu'un circuit d'éclairage ou un circuit de prises de courant.

L'orifice de la face supérieure 15 par lequel l'extrémité dénudée du câble électrique de départ est introduite dans l'appareil 10 est relativement étendu suivant la direction avant-arrière.

Ici, l'appareil 10 est du type modulaire, c'est-à-dire qu'outre sa forme globalement parallélépipédique, sa largeur (distance entre les deux faces principales 11) est un multiple d'une valeur normalisée, connue sous le nom de « module », qui est de l'ordre de 18 mm.

Plus précisément, ici, l'appareil 10 est un disjoncteur unipolaire d'une largeur de un module.

Le rail 20 présente une portion centrale 26 en forme de canal ainsi qu'une aile 27 et une aile 28 qui saillent chacune d'une extrémité respective de la portion centrale 26, vers l'extérieur. Les ailes 27 et 28 sont globalement orientées suivant un même plan.

Le rail 20 est prévu pour être fixé horizontalement sur une paroi, appartenant par exemple à une enveloppe telle qu'un coffret électrique ou une armoire électrique. A l'état fixé, les ailes 27 et 28 sont prévues pour être orientées verticalement, avec la portion centrale 26 en arrière des ailes 27 et 28 et en appui sur la paroi de support. Sur les figures 1 et 2, l'aile 27 est l'aile supérieure et l'aile 28 est l'aile inférieure.

Pour la fixation de l'appareil 10 sur le rail de support 20, l'appareil 10 présente deux becs 30 et 31.

Le bec 30 est formé par l'une des extrémités d'un talon 32 dont l'autre extrémité saille de la face supérieure 15 de l'appareil 10. De façon bien connue (voir par exemple la demande de brevet français 2 652 205), le talon 32 admet une position de service (position illustrée sur les figures 1 et 2) où il est immobilisé par rapport au corps de l'appareil 10 avec le bec 30 qui est saillant du bord supérieur 33 de l'échancrure 16 ; et il est possible de mettre le talon 32, en exerçant un effort dirigé vers le haut sur la portion du talon 32 qui saille au dessus de la face supérieure 15, dans une position effacée où le bec 30 est rétracté dans le corps de l'appareil 10.

Le bec 31 appartient à une griffe 35.

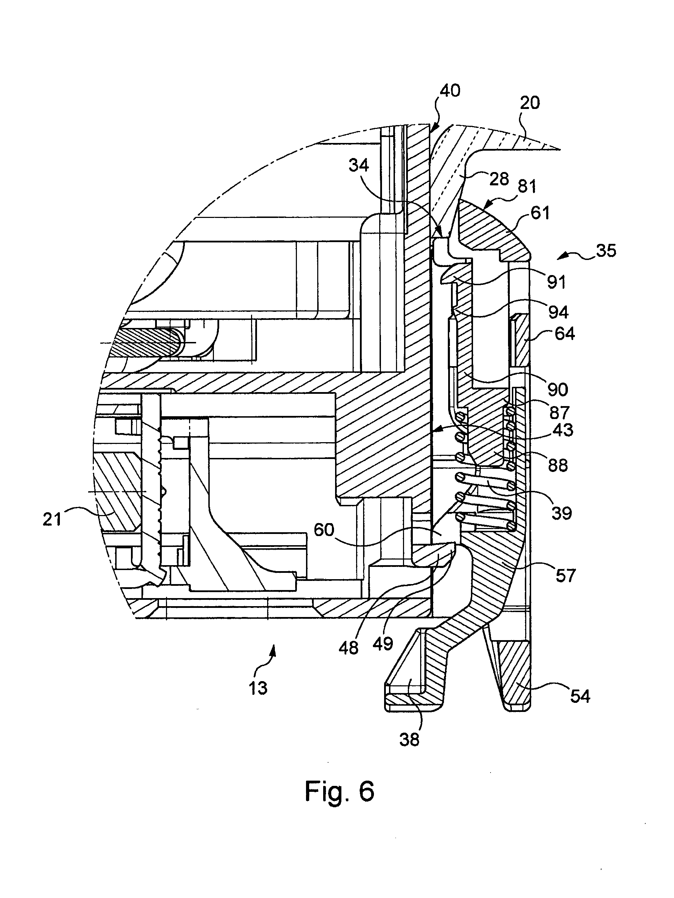

La griffe 35 comporte un chariot 36 monté coulissant sur le corps de l'appareil 10, un coulisseau 37 monté coulissant dans le chariot 36 et un ressort 39 (figures 6, 7 et 10) pour solliciter le coulisseau 37 vers une position déployée où une extrémité du coulisseau 37, formant le bec 31, saille du bord supérieur 34 du chariot 36. Le coulisseau 37 est rétractable, à l'encontre du ressort 39, dans le chariot 36.

La griffe 35 admet une position de service, illustrée sur la figure 1, où le chariot 36 est immobilisé par rapport au corps de l'appareil 10 avec le bord supérieur 34 du chariot 36 qui forme le bord inférieur de l'échancrure 16.

La griffe 35 admet également une position effacée, illustrée sur la figure 2, dans laquelle la griffe 35 est abaissée par rapport à sa position de service.

La griffe 35 comporte en partie inférieure une touche 38 permettant, lorsque la griffe 35 est en position de service, de débloquer le chariot 36 vis-à-vis du corps de l'appareil 10. Une fois débloqué, le chariot 36 peut coulisser vis-à-vis du corps de l'appareil 10 jusqu'à la position effacée illustrée sur la figure 2, qui est une position de fin de course du chariot 36.

Pour remettre la griffe 35 en position de service, il suffit de la faire coulisser vis-à-vis du corps de l'appareil 10 vers le haut, le chariot 10 se bloquant automatiquement vis-à-vis du corps de l'appareil 10 lorsque la position de service est atteinte.

Ainsi qu'on le voit sur la figure 1, l'appareil 10 est configuré pour être fixé au rail 20 avec le talon 32 et la griffe 35 en position de service, l'aile supérieure 27 étant engagée entre le bec 30 et le corps de l'appareil 10 ; et l'aile inférieure 28 engagée entre le bec 31 et le corps de l'appareil 10.

Plus précisément, l'aile supérieure 27 est prise en sandwich entre le bec 30 et la surface 40 du corps de l'appareil 10 qui délimite le fond de l'échancrure 16, la tranche de l'aile supérieure 27 est en regard du bord supérieur 33 de l'échancrure 16, l'aile inférieure 28 est prise en sandwich entre le bec 31 et la surface de fond 40, et la tranche de l'aile inférieure 28 est en regard du bord inférieur de l'échancrure 16, formé ici par le bord supérieur 34 du chariot 36.

La fixation de l'appareil 10 sur le rail 20 se fait par encliquetage.

Plus précisément, l'appareil 10 est configuré pour être fixé au rail de support 20 par engagement de l'aile supérieure 27 entre le corps de l'appareil 10 et le bec 30 alors que l'appareil 10 est incliné pour que le bec 31 soit éloigné de l'aile inférieure 28, puis par basculement de l'appareil 10 autour de l'aile supérieure 27 pour rapprocher le bec 31 de l'aile inférieure 28, le bec 31 se rétractant au contact de l'aile inférieure 28 pour permettre à l'aile inférieure 28 de franchir le bec 31 puis le bec 31 se déploie pour que l'aile inférieure 28 soit retenue entre le corps de l'appareil 10 et le bec 31.

L'appareil 10 est prévu pour être disposé avec d'autres appareils électriques modulaires sur le rail de support 20, pour former une rangée d'appareils électriques côte à côte.

Le peigne 23 de distribution horizontale de l'énergie électrique sert à alimenter l'appareil 10 et les autres appareils de la rangée.

Pour ce faire, le peigne 23 présente une pluralité de dents telle que la dent 22 chacune engagée dans un appareil tel que l'appareil 10.

Pour extraire l'appareil 10, il faut le libérer du rail 20 et du peigne 23.

La rétractation de l'un ou l'autre ou des deux becs 30 et 31 permet de libérer l'appareil 10 du rail 20 mais vu la longueur de la dent 22 et le caractère étroit de l'orifice par lequel la dent 22 est introduite dans l'appareil 10, cela n'est pas suffisant pour libérer l'appareil 10 du peigne 23, du fait de la rigidité d'un tel peigne et de la fixation de ce peigne aux autres appareils de la rangée.

Grâce au caractère effaçable de la griffe 35 à laquelle appartient le bec 31, l'appareil 10 peut être enlevé de la rangée d'appareils sans qu'il soit nécessaire de démonter le peigne 23 de la rangée d'appareils.

Dans la position effacée de la griffe 35 (figure 2), l'écart entre les becs 30 et 31 est tel que l'appareil 10 peut être suffisamment soulevé, par rapport au peigne 23, pour que la dent 22 soit entièrement sortie de l'appareil 10 et qu'en conséquence l'appareil 10 soit à la fois libéré du rail 20 et du peigne 23, ainsi que montré sur la figure 2.

Dans le détail, les opérations à effectuer pour pouvoir enlever l'appareil 10 de la rangée d'appareils sont les suivantes :
- desserrage de la borne de raccordement 21 et de la borne de raccordement (non représenté) située sous la face supérieure 15 ;
- extraction hors de l'appareil 10 du câble électrique qui était raccordé à la borne située sous la face supérieure 15 (le caractère déformable d'un câble électrique permet cette extraction) ;
- appui sur la touche 38 de la griffe 35 et déplacement de la griffe 35 pour l'amener à sa position effacée illustrée sur la figure 2 ; et
- soulèvement de l'appareil 10 en l'inclinant légèrement pour le libérer à la fois du rail 20 et du peigne 23.

On notera que l'alimentation de la rangée d'appareils par un peigne tel que le peigne 23 situé sous les appareils, avec une fente étroite prévue dans chaque appareil pour recevoir une dent telle que la dent 22, est mise en oeuvre dans certains pays tels que l'Allemagne.

Dans d'autres pays, tels que la France, l'alimentation des appareils de la rangée s'effectue par un peigne situé au-dessus des appareils avec chaque dent de ce peigne engagée dans un appareil par un orifice relativement étendu suivant la direction avant-arrière permettant aussi bien à une dent de peigne qu'à l'extrémité dénudée d'un câble électrique d'accéder à la borne de raccordement située sous la face supérieure 15.

L'appareil électrique 10 peut également être utilisé dans ces pays, avec une dent de peigne qui accède à la borne située sous la face supérieure 15 par l'orifice relativement étendu ménagé dans la face supérieure 15, et avec le câble électrique de départ qui accède à la borne 21 par l'orifice relativement étendu ménagé dans la face inférieure 13.

Lorsque l'appareil 10 est utilisé dans des pays tels que la France, pour démonter l'appareil 10 de la rangée d'appareils, on agit sur le talon 32 pour le faire passer en position effacée et on débloque la griffe 35 en exerçant sur la touche 38 un effort dirigé vers l'arrière.

Du fait que l'orifice ménagé dans la face supérieure 15 est dimensionné pour permettre l'accès aussi bien d'une dent de peigne que de l'extrémité dénudée d'un câble électrique, cet orifice est bien plus étendu suivant la direction avant-arrière que l'épaisseur d'une dent de peigne.

L'extension relativement importante de cet orifice permet, lorsque le talon 32 est en position effacée (bec 30 rétracté dans le corps de l'appareil 10) et que la borne de raccordement située sous la face supérieure 15 a été desserrée, d'incliner l'appareil 10 jusqu'à ce que l'aile supérieure 27 soit hors de l'échancrure 16.

Si le câble électrique raccordé à la borne 21 a précédemment été enlevé, il est alors possible d'abaisser l'appareil électrique 10 pour le dégager de la dent du peigne situé au-dessus des appareils de la rangée et pour le dégager de l'aile 28, de sorte que l'appareil électrique 10 est alors libéré de ce peigne et du rail 20.

Dans une variante non illustrée de l'appareil 1, prévue pour être utilisée uniquement dans les pays où le peigne de distribution de l'énergie électrique est situé sous les appareils, le bec 30 n'est pas rétractable dans le corps de l'appareil 10 mais est fixe, en étant par exemple d'une seule pièce avec le corps de l'appareil 10.

On va maintenant décrire en détail la griffe de fixation 35 et la partie de l'appareil électrique 10 avec laquelle coopère la griffe 35.

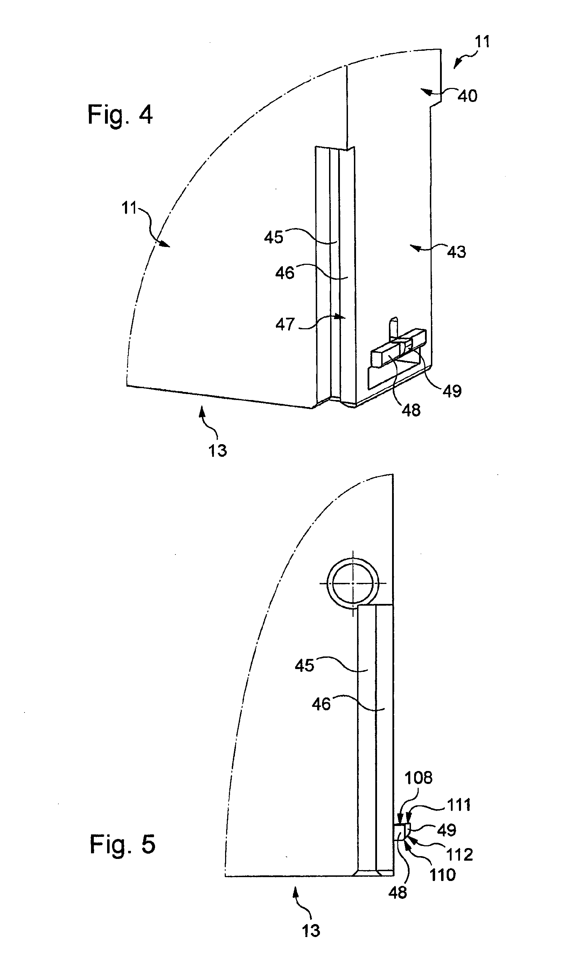

Ainsi qu'on le voit sur les figures 2 à 5, la surface 40 du corps de l'appareil 10 qui forme le fond de l'échancrure 16 se prolonge par une surface 43 qui s'étend de la surface 40 jusqu'à la face inférieure 13.

Dans chacune des faces principales 11, le long de la surface 43, est ménagée une rainure 45 débouchant dans la face inférieure 13.

Entre chaque rainure 45 et la surface 43, il existe une nervure 46 dont la tranche 47 est en retrait par rapport à la face principale 11.

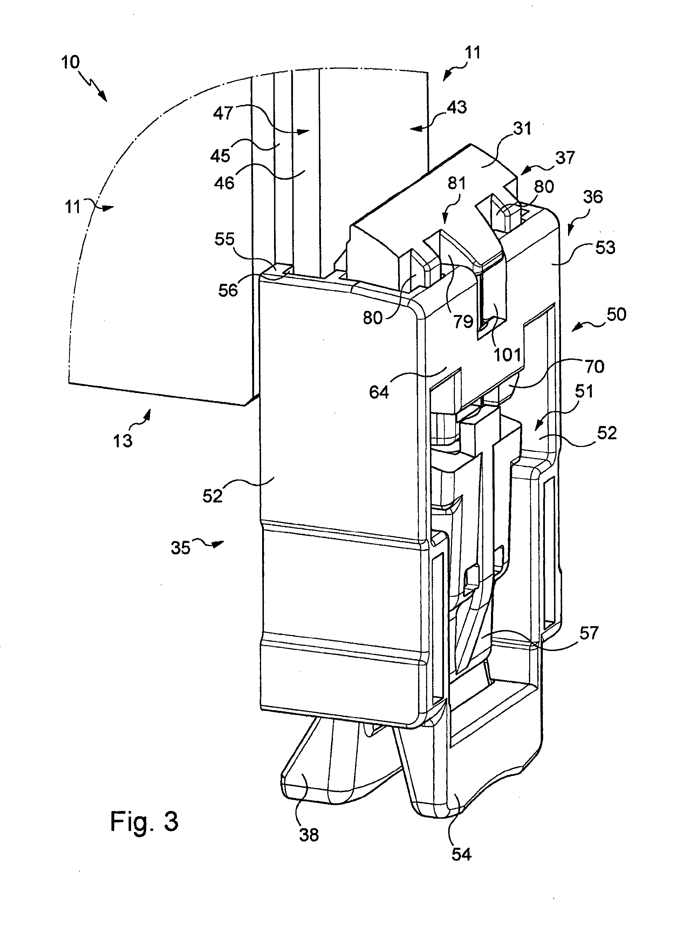

Ainsi qu'on le voit plus particulièrement sur la figure 3, l'écart entre la tranche 47 et la face principale 11 permet aux faces latérales du chariot 36 d'être en léger retrait par rapport à la face principale 11. Cela permet au chariot 36 de coulisser y compris lorsque l'appareil 10 fait partie d'une rangée d'appareils avec chaque face principale 11 de l'appareil 10 qui est contre une face principale d'un appareil voisin.

A proximité de la face inférieure 13, une patte 48 saille de la surface 43.

La patte 48 est allongée suivant la direction horizontale.

Au milieu de la patte 48 un ergot 49 saille vers l'arrière.

Le chariot 36 est en matière plastique moulée d'une seule pièce. II comporte un châssis 50 et un cliquet 51.

Le châssis 50 comporte deux flasques latéraux 52, une traverse supérieure 53 s'étendant de l'un à l'autre des flasques latéraux 52 à leur extrémité supérieure et une traverse inférieure 54 s'étendant de l'un à l'autre des flasques latéraux 52 à leur extrémité inférieure.

L'extrémité avant de chaque flasque 52 forme une nervure 55 longeant une rainure 56.

Pour chaque flasque latéral 52, la nervure 55 est configurée pour être reçue dans la rainure 45 du corps de l'appareil 10 tandis que la rainure 56 est configurée pour recevoir la nervure 46 du corps de l'appareil 10.

Les rainures et nervures 45, 46, 55 et 56 procurent un guidage à coulissement du chariot 36 vis-à-vis du corps de l'appareil 10.

Pour chacune des faces principales 11, l'extrémité supérieure de la rainure 45 forme une butée de fin de course pour le chariot 36, et plus précisément pour le bord supérieur de la nervure 55.

Le cliquet 51 prend racine sur la traverse supérieure 53, à partir de laquelle il s'étend vers le bas. L'extrémité distale du cliquet 51 (extrémité opposée à celle par laquelle le cliquet 51 prend racine sur la traverse supérieure 53) forme l'extrémité inférieure de la touche 38.

Entre la touche 38 et la traverse supérieure 53, le cliquet 51 comporte successivement une platine 57, deux joues 58 et deux charnières 59.

L'extrémité inférieure de la platine 57 se raccorde à l'extrémité supérieure de la touche 38. L'extrémité inférieure de chaque joue 58 se raccorde à l'extrémité supérieure de la platine 57. L'extrémité inférieure de chaque charnière 59 se raccorde à l'extrémité supérieure d'une respective des joues 58. L'extrémité supérieure de chaque charnière 59 se raccorde à la traverse supérieure 53.

Les charnières 59 sont formées par des portions de matière plastique de plus faible section que les autres zones du cliquet 51.

Lorsqu'un effort est exercé sur la touche 38 vers l'arrière (vers la droite sur la figure 6), le cliquet 51 fléchit en se déformant pour l'essentiel au niveau des charnières 59.

Le fléchissement du cliquet 51 permet à la touche 38 de se déplacer vers l'arrière jusqu'à ce qu'elle rencontre la traverse inférieure 54, qui forme une butée de fin de course.

Le fléchissement du cliquet 51 est élastique, c'est-à-dire que quand on cesse d'exercer un effort, le cliquet 51 revient à sa position de repos illustrée sur les dessins.

A la jonction entre la platine 57 et chaque joue 58, le cliquet 51 comporte un mentonnet 60 saillant vers l'avant.

Ainsi qu'on le voit sur la figure 6, en position de service de la griffe 35 (figures 1 et 6), chaque mentonnet 60 est en prise avec la patte 48. C'est ainsi que la griffe 35 est bloquée en position de service.

Si, comme il vient d'être expliqué, l'on exerce sur la touche 38 un effort dirigé vers l'arrière, le fléchissement du cliquet 51 qui en résulte permet de libérer les mentonnets 60 de la patte 48, la griffe 35 n'est plus bloquée en position de service et peut être abaissée jusqu'à sa position effacée (figures 2 et 3).

Le coulisseau 37 comporte une longrine 61 dont une extrémité forme le bec 31. Du côté de la longrine 61 opposé à l'extrémité formant le bec 31 saillent deux bras latéraux 62 et une tige centrale 63.

La traverse supérieure 53 comporte des passages 68 et 69 respectivement pour la tige centrale 63 et pour les bras latéraux 62.

Sous la traverse supérieure 53, les bras latéraux 62 se logent chacun entre un flasque latéral 52 et une joue 58 tandis que la tige centrale 63 se loge entre les joues 58.

Le ressort 39 est en prise respectivement avec l'extrémité inférieure de la tige centrale 63 et avec l'extrémité supérieure de la platine 57.

La présence du coulisseau 37 et du ressort 39 dans le chariot 36 n'interfère pas sur la capacité de flexion et de retour élastique du cliquet 51.

En effet, le ressort 39 est capable de se déformer pour accompagner les mouvements de flexion et de retour élastique du cliquet 51 ; tandis que c'est pour l'essentiel le châssis 50 (et non le cliquet 51) qui guide le coulisseau 37 dans le chariot 36.

La traverse supérieure 53 comporte une platine 64 située à l'arrière et deux équerres 65 comportant chacune une première branche 66 prenant racine sur la platine 64 et une deuxième branche 67 s'étendant entre la première branche 66 et le flasque latéral 52 le plus proche.

Les deux équerres 65 sont disposées en image miroir l'une de l'autre.

Entre les deux équerres 65 existe un espace 68 formant un passage pour la tige centrale 63 du coulisseau 37.

Chaque espace 69 entouré par une équerre 65 respective, par le flasque latéral 52 correspondant et par la platine 64, forme un passage pour un respectif des bras latéraux 62 du coulisseau 37.

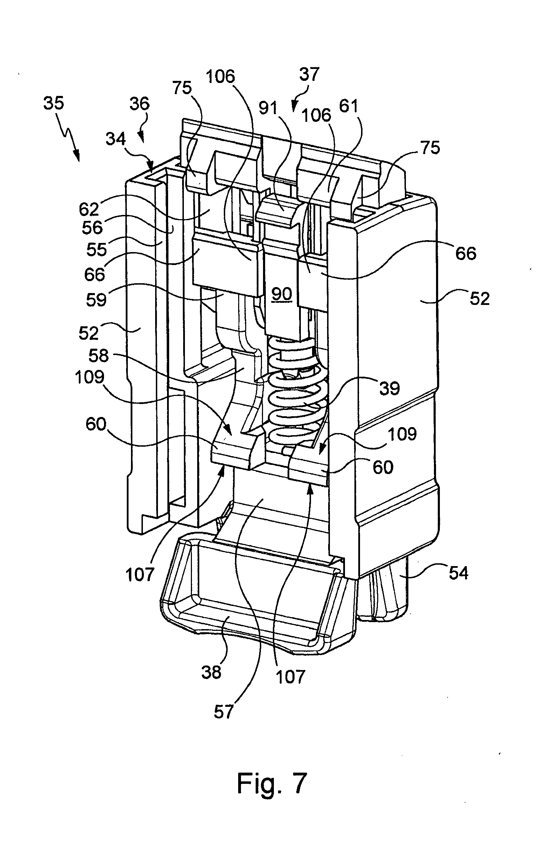

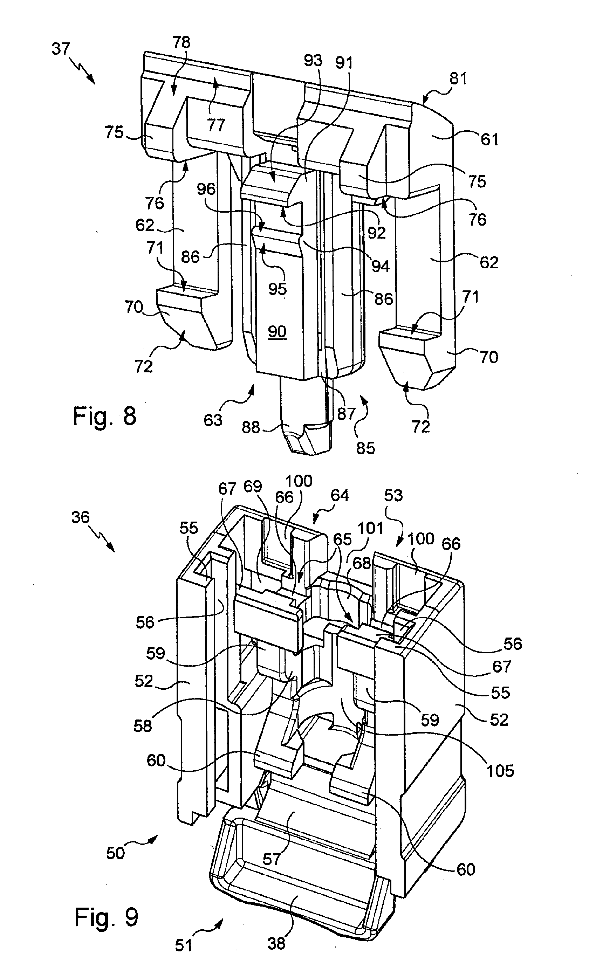

Ainsi qu'on le voit plus particulièrement sur les figures 7 et 9, chacune des équerres 65 est en dessous du bord supérieur 34 du chariot 36 (bord supérieur du châssis 50).

Chacune des charnières 59 prend racine sur la traverse supérieure 53 par la face avant de la première branche 66 d'une équerre 65 respective.

Dans le coulisseau 37, chaque bras latéral 62 comporte à son extrémité distale (extrémité opposée à la longrine 61) un cran 70 saillant vers l'avant. La face arrière de chaque bras 62 est plate et de même pour la face avant de la portion de chaque bras 62 situé entre le cran 70 et la longrine 61.

Chaque cran 70 présente une face horizontale 71 regardant vers la longrine 61, c'est-à-dire vers le haut, et une face inclinée 72 formant rampe entre la face horizontale 71 et le bord inférieur du bras 62.

Au droit de chaque bras latéral 62, la longrine 61 présente une nervure 75 saillant vers l'avant. Chaque nervure 75 présente une face horizontale 76 en regard de la face horizontale 71 du cran 70. En d'autres termes, la face horizontale 76 regarde vers le bas.

La face avant de la longrine 61 présente, à partir du bord supérieur, une face verticale 77 qui se raccorde à une face 78 inclinée vers l'avant et vers le bas. La face supérieure de la nervure 75 appartient à la face inclinée 78.

Ainsi qu'on le voit sur la figure 3, la longrine 61 comporte trois nervures saillant vers l'arrière, respectivement une nervure centrale 79 et deux nervures latérales 80. La nervure centrale 79 saille davantage que les nervures latérales 80.

La face arrière de la longrine 61 présente, à partir du bord supérieur, une face 81 inclinée vers le bas et vers l'arrière. La face supérieure des nervures 79 et 80 appartient à la face inclinée 81.

La tige centrale 63 du coulisseau 37 comporte une fourche 85 comportant deux bras 86, une traverse 87 et un doigt d'extrémité 88.

Les bras 86 saillent vers le bas depuis la longrine 61. L'extrémité inférieure de chaque bras 86 se raccorde à une extrémité respective de la traverse 87.

Le doigt d'extrémité 88 saille vers le bas à partir du centre de la traverse 87.

La tige centrale 63 comporte, en outre de la fourche 85, une patte flexible 90 qui saille vers le haut à partir de la traverse 87.

Ici, la patte flexible 90 prend racine sur la face avant de la traverse 87 et est plus généralement en avant de la fourche 85. Plus précisément, à part l'extrémité inférieure de la patte flexible 90 qui est raccordée à la traverse 87, la patte flexible 90 est en avant de l'espace encadré par les bras 86, la traverse 87 et la longrine 61. La patte flexible 90 peut ainsi fléchir dans cet espace, sans que sa flexion soit gênée par la longrine 61 et les bras 86.

La patte flexible 90 comporte à son extrémité distale (extrémité opposée à la traverse 87) un cran 91 saillant vers l'avant.

Le cran 91 présente une face horizontale 92 et une face inclinée 93 formant rampe entre la face horizontale 92 et le bord supérieur de la patte flexible 90.

Sous le cran 91, la patte flexible 90 présente une nervure 94 moins saillante que le cran 91. La nervure 94 présente une face 95 inclinée vers le bas et vers l'arrière et une face 96 inclinée vers le haut et vers l'arrière. Le bord supérieur de la face 95 se raccorde au bord inférieur de la face 96. La face 96 est moins inclinée que la face 95.

Ainsi qu'expliqué ultérieurement, le cran 91 et la nervure 94 sont configurés pour coopérer avec l'ergot 49 saillant au milieu de la patte 48.

La platine 64 présente en avant de chaque équerre 65 une rainure 100 pour loger une nervure latérale 80 respective de la longrine 61.

La platine 64 présente entre les rainures 100 une encoche 101 pour loger la nervure centrale 79 de la longrine 61.

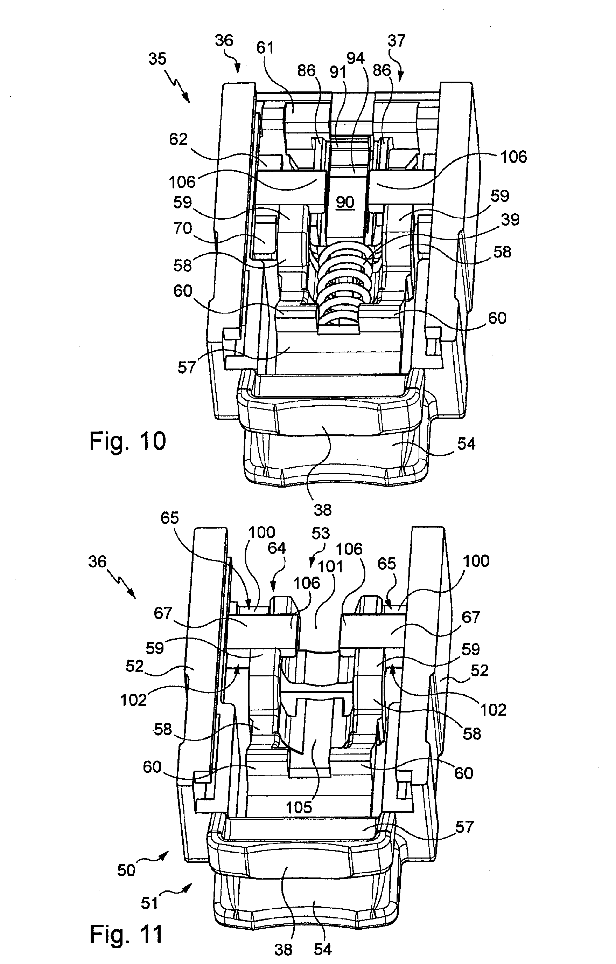

Pour chacune des équerres 65, la deuxième branche 67 présente une face horizontale 102 (figure 11) qui regarde vers le bas.

Le bord arrière de chaque face 102 se raccorde à une face (non visible sur les dessins) inclinée vers le haut et vers l'avant. Ainsi, l'épaisseur (dimension avant-arrière) de la deuxième branche 67 de l'équerre 65 augmente du haut vers le bas, jusqu'à être maximale au niveau de la face 102.

Le cliquet 51 comporte entre les deux joues 58, à l'arrière, une paroi 105. Les mentonnets 60 présentent une portion saillant au-dessus du bord supérieur de la platine 64. La paroi 105 et les portions saillantes des mentonnets 60 servent à retenir le ressort 39.

Dans une variante non illustrée, la paroi 105 et les portions saillantes des mentonnets 60 sont remplacés par un téton saillant vers le haut du bord supérieur de la platine 57, avec l'extrémité inférieure du ressort 39 qui entoure ce téton.

L'assemblage de la griffe 35 s'effectue en disposant le ressort 39 entre les joues 58 avec l'extrémité inférieure du ressort 39 contre le bord supérieur de la platine 57. Le coulisseau 37 est alors engagé dans la traverse supérieure 53 avec la tige centrale 63 qui pénètre par le doigt d'extrémité 88 dans l'espace 68 et avec chaque bras latéral 62 qui pénètre par son cran 70 dans un espace 69 respectif.

Au cours du mouvement d'enfoncement, la face inclinée 72 de chaque cran 70 rencontre la face inclinée (non visible sur les dessins) de la deuxième branche 67 de l'équerre 65 correspondante, de sorte que chaque bras latéral 62 fléchit jusqu'à ce que le cran 70 ait franchi la deuxième branche 67. Chaque bras 62 se détend alors et la face horizontale 71 du cran 70 vient en regard de la face horizontale 102 de la deuxième branche 67 correspondante.

Lors du mouvement d'enfoncement du coulisseau 37 dans le chariot 36, le doigt d'extrémité 88 s'engage dans l'extrémité supérieure du ressort 39 et le ressort 39 se comprime au contact de la face inférieure de la traverse 87.

Lorsqu'on cesse d'exercer un effort d'enfoncement du coulisseau 37 dans le chariot 36, le ressort 39 se détend et ramène le coulisseau 37 dans la position où le bec 31 est déployé.

La venue en contact de la face horizontale 71 du cran 70 et de la face horizontale 102 de la deuxième branche 67, de chaque côté, fixe la fin de course vers le haut du coulisseau 37.

La fin de course vers le bas (position rétractée du coulisseau 37) est fixée par la venue en contact de la face horizontale 76 de la nervure 75 de la longrine 61 contre la deuxième branche 67 de l'équerre 65, de chaque côté.

Chacune des équerres 65 comporte, en débord vers l'autre équerre 65, à l'avant, une nervure 106.

La patte flexible 90 se loge entre les nervures 106.

Chaque bras 86 a sa tranche avant en regard de la face arrière d'une nervure 106 respective.

Lorsque l'appareil 10 est fixé sur le rail 20, la face arrière de l'aile inférieure 28 est en contact avec la face avant de la longrine 61, principalement par la face inclinée 78, avec l'exercice sur le bec 31 formant l'extrémité supérieure du coulisseau 37, d'un effort dirigé vers l'arrière.

Cet effort est repris pour l'essentiel par la platine 64 et par les nervures 106.

Les nervures 75 permettent de donner à la face inclinée 78 une certaine extension.

Lors de l'encliquetage de l'appareil 10 sur le rail 20, la face avant de l'aile inférieure 28 vient au contact de la face inclinée 81 de la face arrière de la longrine 61.

L'inclinaison vers le bas et vers l'arrière de la face 81 a pour effet que le coulisseau 37 est sollicité vers le bas, de sorte que le coulisseau 37 se rétracte dans le chariot 36, alors que le ressort 39 se comprime.

Lorsque l'aile inférieure 28 a franchi l'extrémité supérieure du coulisseau 37 (bec 31), le ressort 39 se détend et fait s'élever le coulisseau 37 de sorte que le bec 31 est ramené en position déployée. Les nervures latérales 80 et surtout la nervure centrale 79 procurent une certaine extension à la face 81 favorable à une bonne coopération avec l'aile inférieure 28.

On notera que les bras latéraux 62 du coulisseau 37, relativement longs, participent à la qualité du guidage à coulissement entre le châssis 50 et le coulisseau 37, la surface de chaque bras 62 située le plus à droite où le plus à gauche glissant contre la surface en regard du flasque latéral 52 correspondant.

L'assemblage de la griffe 35 et du corps de l'appareil 10 s'effectue en engageant, de chaque côté, la nervure 55 du chariot 36 dans la rainure 45 du corps de l'appareil 10 et la nervure 46 de ce corps dans la rainure 56 du chariot 36 par le bas du corps de l'appareil 10, puis en élevant la griffe 35 par rapport au corps de l'appareil 10.

Au cours du mouvement d'élèvement, le cran 91 de la patte flexible 90 du coulisseau 37 rencontre l'ergot 49 qui saille au milieu de la patte 48. Au contact de l'ergot, la patte 90 fléchit vers l'arrière et, lorsque l'ergot 49 est franchi, la patte 90 se détend en revenant vers sa position de repos illustrée sur les dessins. La nervure 94 vient à son tour à la rencontre de l'ergot 49. Au contact de l'ergot 94, la patte flexible fléchit à nouveau vers l'arrière et lorsque l'ergot 49 est franchi par la nervure 94, la patte 90 se détend et reprend sa position de repos. Ensuite, les mentonnets 60 rencontrent la patte 48. Au contact de la patte 48 et des mentonnets 60, le cliquet 51 fléchit vers l'arrière et lorsque les mentonnets 60 ont franchi la patte 48, le cliquet 51 se détend et reprend sa position de repos illustrée sur les dessins alors que le chariot 36 parvient en fin de course vers le haut, par la venue en contact du bord supérieur de la nervure 55 avec l'extrémité supérieure de la rainure 45.

La griffe 35 est alors dans la position de service illustrée sur les figures 1 et 6.

Dans la position de service de la griffe 35, la face inférieure 107 de chaque mentonnet 60 et la face supérieure 108 de la patte 48 sont en regard l'une de l'autre, ce qui bloque la griffe 35 vis-à-vis du corps de l'appareil 10.

Pour chacun des mentonnets 60, la face inférieure 107 est une face horizontale qui regarde vers le bas. Chaque mentonnet 60 présente une face supérieure 109 inclinée vers le haut et vers l'arrière.

La face supérieure 108 de la patte 48 est une face horizontale qui regarde vers le haut. La patte 48 comporte également une face inclinée formant rampe entre la face supérieure 108 et sa face inférieure.

L'ergot 49 présente une face supérieure 111 qui est une face horizontale regardant vers le haut. La face supérieure 111 de l'ergot 49 et la face supérieure 108 de la patte 48 sont à fleur l'une de l'autre.

L'ergot 49 présente une face inclinée 112 qui forme rampe entre la face supérieure 111 et sa face inférieure. La face inférieure de l'ergot 49 est à fleur de la face inférieure de la patte 48.

Dans la position de service de la griffe 35, du fait que les faces en contact 107 et 108 respectivement des mentonnets 60 et de la patte 48 sont horizontales, l'exercice d'un effort d'abaissement ne fait pas fléchir le cliquet 51.

L'orientation de la face supérieure 109 des mentonnets 60 et l'orientation de la face inclinée 110 de la patte 48 sont telles que le cliquet 51 fléchit lorsque la griffe 35 est élevée par rapport au corps de l'appareil 10.

Dans la position de service de la griffe 35, l'ergot 49 se loge entre les mentonnets 60.

Ainsi qu'expliqué ci-dessus, pour débloquer le chariot 36 vis-à-vis du corps de l'appareil 10, l'on fait fléchir le cliquet 51 en exerçant sur la touche 38 un effort dirigé vers l'arrière.

La flexion du cliquet 51 permet aux mentonnets 60 de se trouver en arrière de la patte 48 et donc d'être libéré de cette patte.

La griffe 35 peut alors être abaissée. Au cours du mouvement d'abaissement, la nervure 94 de la patte flexible 90 vient à la rencontre de l'ergot 49. Au contact de la face inclinée inférieure 95 de la nervure 94 avec la face supérieure 111 de l'ergot 49, la patte 90 fléchit vers l'arrière, de sorte que la nervure 94 peut franchir l'ergot 49. Ensuite, la face inférieure horizontale 92 du cran 91 vient à la rencontre de la face supérieure horizontale 111 de l'ergot 49. Les faces 92 et 111 étant horizontales, la patte 90 ne fléchit pas et la griffe 35 ne peut s'abaisser davantage.

L'on est alors en fin de course, dans la position effacée illustrée sur les figures 2 et 3.

La nervure 94 permet à l'utilisateur, qui ressent une certaine résistance lorsque la nervure 94 franchit l'ergot 49, d'être averti de la proximité de la fin de course vers le bas de la griffe 35.

La nervure 94 permet également de maintenir la griffe 35 en position effacée, puisque pour permettre à la griffe 35 de s'élever par rapport au corps de l'appareil 10, il faut exercer un certain effort pour que la nervure 94 puisse franchir l'ergot 49.

Pour remettre la griffe en position de service, ainsi qu'indiqué ci-dessus, il suffit de faire coulisser la griffe 35 vis-à-vis du corps de l'appareil 10 vers le haut, le cliquet 51 fléchissant vers l'arrière au contact des mentonnets 60 avec la patte 48 puis se détendant pour bloquer la griffe 35 en position de service.

On observera sur les figures 1 et 6, qu'en position de service, la touche 38 se trouve sous le corps de l'appareil 1. Cela lui permet d'être aisément accessible.

On observera encore que la traverse inférieure 54 est juste en arrière de la touche 38. Ainsi qu'expliqué ci-dessus, la traverse inférieure 54 procure une butée de fin de course pour la touche 38, limitant la flexion vers l'arrière du cliquet 51.

Ainsi qu'on le voit plus particulièrement sur la figure 3, la traverse inférieure 54 est formée par une platine disposée à l'arrière, sous les flasques latéraux 52.

Dans une variante non illustrée, la traverse inférieure comporte également un plastron situé en avant de la touche 38 et relié, par des bras situés de part et d'autre de la touche 38, à une platine semblable à la traverse inférieure 54. Dans le plastron est ménagée une fenêtre centrale permettant d'accéder à la touche 38. Un tel plastron permet d'éviter d'appuyer accidentellement sur la touche 38, puisqu'il faut passer au travers de la fenêtre du plastron pour agir sur la touche 38.

Ainsi qu'expliqué ci-dessus, dans la position de service, la tranche de l'aile inférieure 28 est en regard du bord supérieur 34 du chariot 36.

Lorsque l'on serre les bornes de l'appareil 10, par exemple la borne 21, l'effort s'exerçant sur le bord supérieur 34 peut être très important.

Le blocage en position de service procuré par le cliquet 51 est particulièrement sûr et permet de supporter des efforts extrêmement importants, sans que les mentonnets 60 échappent à la patte 48 ; en particulier grâce à l'agencement des joues 58, des charnières 59 et de la traverse supérieure 53.

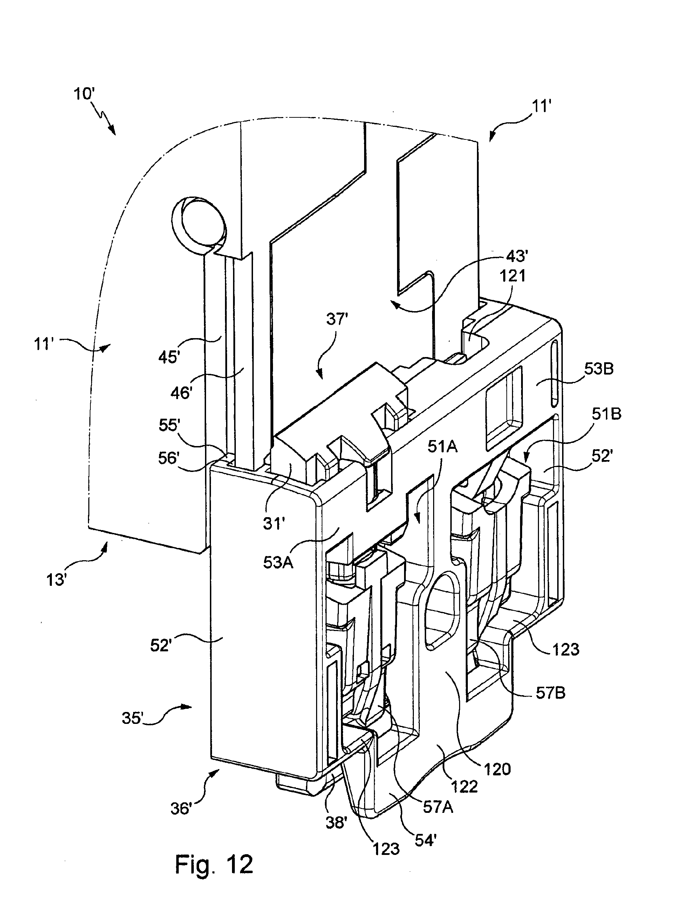

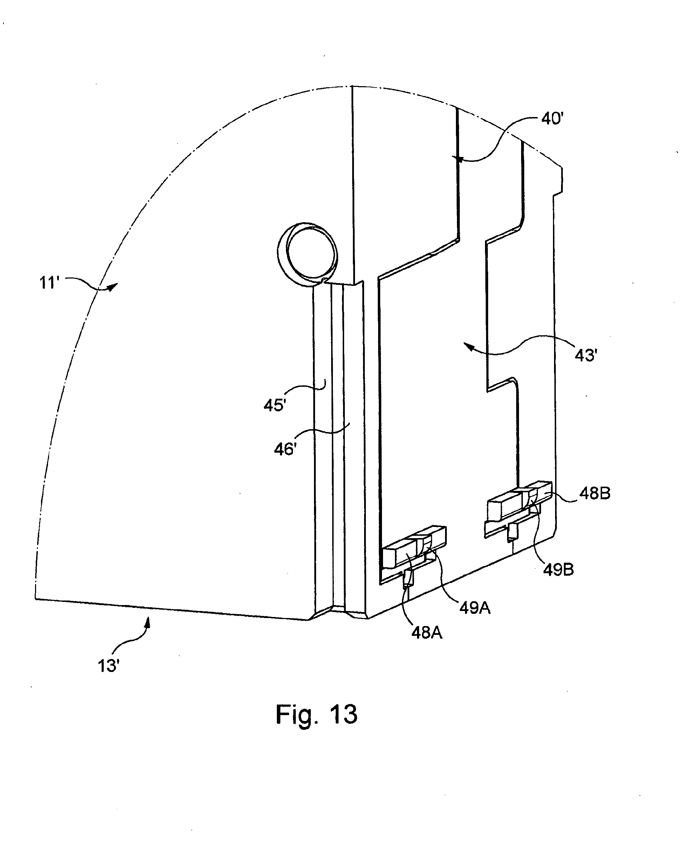

On va maintenant décrire à l'appui des figures 12 à 15 une variante 10' de l'appareil 10. Pour les éléments semblables, on a utilisé les mêmes références numériques, mais avec un exposant'.

D'une façon générale, l'appareil 10' est semblable à l'appareil 10, si ce n'est que sa largeur (distance entre les deux faces principales 11') est le double de la largeur de l'appareil 10, c'est-à-dire que l'appareil 10' a une largeur de deux modules.

La surface 43' du corps de l'appareil 10 comporte deux pattes 48A et 48B chacune semblable à la patte 48 de l'appareil 10. Au milieu de la patte 48A un ergot 49A saille vers l'arrière. Au milieu de la patte 48B un ergot 49B saille vers l'arrière. Les ergots 49A et 49B sont semblables à l'ergot 49.

Le chariot 36', tout comme le chariot 36, est en matière plastique moulée d'une seule pièce. Le châssis 50' du chariot 36' est deux fois plus large que le châssis 50 du chariot 36.

Le châssis 50' comporte deux flasques latéraux 52' semblables au flasque 52 du châssis 50.

En particulier, l'extrémité avant de chacun des flasques 52' forme une nervure 55' longeant une rainure 56', avec la nervure 55' qui est configurée pour être reçue dans la rainure 45' du corps de l'appareil 10' tandis que la rainure 56' est configurée pour recevoir la nervure 46' du corps de l'appareil 10'.

A mi-distance entre les flasques latéraux 52', le châssis 50' comporte un longeron 120.

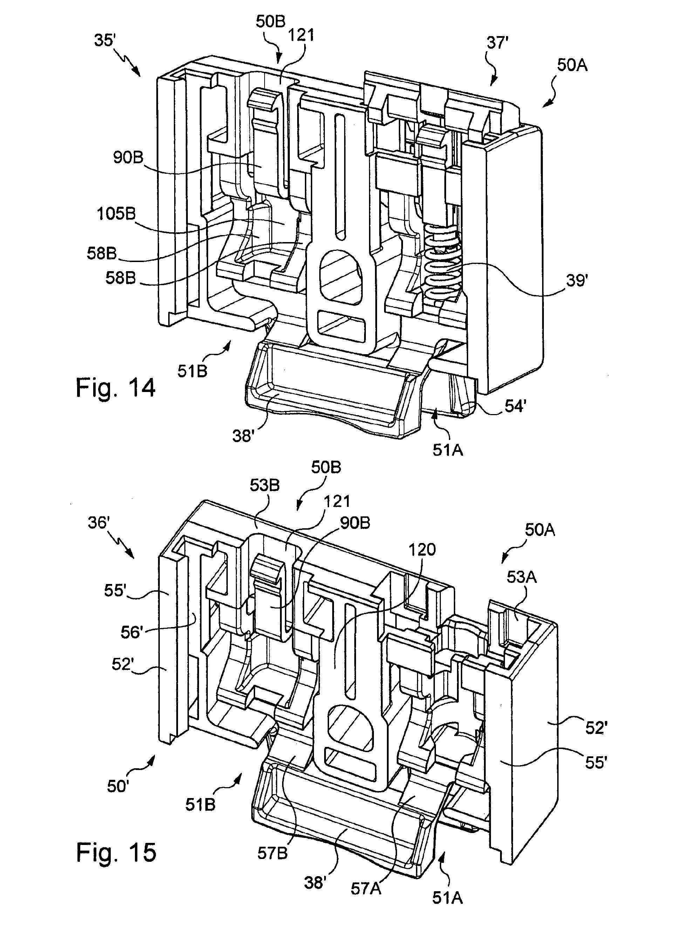

D'une façon générale, la portion 50A du châssis 50 située entre le longeron 120 et le flasque latéral 52' que l'on voit à gauche sur la figure 12 (à droite sur les figures 14 et 15) est agencé comme la portion du châssis 50 situé entre les flasques latéraux 52.

La portion 50B du châssis 50 située entre le longeron 120 et le flasque latéral 52' que l'on voit à droite sur la figure 12 (à gauche sur les figures 14 et 15) est agencé comme le châssis 50 si ce n'est que cette portion ne reçoit pas de coulisseau.

La portion 50A du châssis 50' comporte entre le longeron 120 et le flasque latéral 52' correspondant, une traverse supérieure 53A semblable à la traverse 53 du châssis 50.

Le chariot 36' comporte, dans la portion 50A du châssis 50', un cliquet 51A semblable au cliquet 51 du chariot 36, à l'exception de la platine 57 et de la touche 38, ainsi qu'expliqué ci-après. La portion du chariot 36' formée par la portion 50A du châssis 50' et par le cliquet 51A reçoit un coulisseau 37' et un ressort 39' identiques au coulisseau 37 et au ressort 39 de la griffe 35.

La portion 50B du châssis 50' comporte entre le longeron 120 et le flasque latéral 52' correspondant, une traverse supérieure 53B s'étendant de l'un à l'autre du longeron 120 et du flasque latéral 52' correspondant.

Le chariot 36' comporte dans la portion 50B du châssis 50', un cliquet 51B semblable au cliquet 51 du chariot 36, à l'exception de la platine 57 et de la touche 38 tandis que le cliquet 51B comporte en outre une patte flexible 90B semblable à la patte flexible 90 du coulisseau 37. La patte flexible 90B prend racine sur la face avant d'une paroi 105B du cliquet 51B disposé entre les deux joues 58B du cliquet 51B.

La traverse supérieure 53B est configurée pour laisser en arrière de la patte flexible 90B un espace 121 permettant à la patte flexible 90B de fléchir vers l'arrière comme la patte flexible 90 du coulisseau 37.

D'une façon générale, la patte flexible 90B est disposée dans la portion 50B du châssis 50' au même emplacement que la patte flexible du coulisseau 37' dans la portion 50A du châssis 50', lorsque le coulisseau 37' est en position déployée (voir la figure 14).

La touche 38' est commune aux cliquets 51A et 51B : la touche 38' est centrée sur le longeron 120 et est reliée, d'un premier côté, à la platine 57A du cliquet 51A et, du second côté, à la platine 57B du cliquet 51A.

La traverse inférieure 54' du châssis 50' comporte une platine centrale 122 saillant vers le bas de l'extrémité inférieure du longeron 120 et s'étendant de part et d'autre du longeron 120 vers les flasques latéraux 52' respectifs sur une certaine distance. De chaque côté, la platine 122 est reliée au flasque latéral 52' correspondant par une équerre 123.

La platine 122 est disposée en regard de la touche 38'.

De même que la traverse inférieure 54 du châssis 50 sert de butée de fin de course à la touche 38 du châssis 50, la platine 122 sert de butée de fin de course à la touche 38'.

L'exercice sur la touche 38' d'un effort dirigé vers l'arrière fait fléchir conjointement les cliquets 51A et 51B.

D'une façon générale, la griffe 35' s'utilise comme la griffe 35, les mentonnets du cliquet 51A et la patte flexible du coulisseau 37' coopérant avec la patte 48A et l'ergot 49A tandis que les mentonnets du cliquet 51B et la patte flexible 90B du cliquet 51B coopèrent avec la patte 48B et l'ergot 49B.

Le blocage en position de service procuré par les cliquets 51A et 51B est particulièrement sûr et permet de supporter des efforts extrêmement importants lorsque l'on serre les bornes de l'appareil 10' ; en particulier grâce à la présence des deux cliquets 51A et 51B.

Il est avantageux, pour simplifier la griffe 35', de ne mettre en oeuvre que le seul coulisseau 37'.

Dans une variante non illustrée, les portions situées de part et d'autre du longeron central sont identiques et reçoivent chacune un coulisseau semblable au coulisseau 37.

Dans une autre variante non illustrée, la portion de la griffe telle que 35 située entre le longeron tel que 120 et l'un des flasque latéraux 52' est une simple entretoise (il n'existe pas de cliquet tel que le cliquet 51B).

Le fait que la touche 38' soit commune aux cliquets 51A et 51B permet de simplifier la commande de la griffe 35'.

Dans une variante non illustrée, chacun des cliquets 51A et 51B comporte sa propre touche de commande.

Dans une variante non illustrée, le châssis tel que 50 ou 50' de la griffe telle que 35 ou 35' ne comporte pas de traverse inférieure telle que 54 ou 54'.

Dans une variante non illustrée, le chariot tel que 36 ou 36' n'est pas en matière plastique moulée, mais dans une autre matière, par exemple une bande métallique pliée, comme la griffe décrite dans la demande de brevet allemand DE 44 39 672.

Dans d'autres variantes non illustrées, l'appareil tel que 10 ou 10' n'est pas un disjoncteur unipolaire, mais un disjoncteur phase-neutre voire un disjoncteur triphasé ou un autre appareil modulaire qu'un disjoncteur, par exemple un interrupteur différentiel ou un appareil autre qu'un appareil de protection, par exemple un télérupteur.

De nombreuses autres variantes sont possibles en fonction des circonstances, et l'on rappelle à cet égard que l'invention ne se limite pas aux exemples décrits et représentés.

## Revendications

1. Appareil électrique à fixer par encliquetage sur un rail de support horizontal (20) présentant une aile supérieure (27) et une aile inférieure (28), lequel appareil (10 ; 10') présente sur une face arrière (12) un bec supérieur (30) et un bec inférieur (31 ; 31') en regard l'un de l'autre, ledit appareil (10 ; 10') étant configuré pour être fixé audit rail (20) avec ladite aile supérieure (27) engagée entre le bec supérieur (30) et le corps de l'appareil (10 ; 10') et avec ladite aile inférieure (28) engagée entre le bec inférieur (31 ; 31') et le corps de l'appareil (10 ; 10'), ledit bec inférieur (31 ; 31') étant élastiquement rétractable pour permettre la fixation de l'appareil (10 ; 10') sur le rail (20) par encliquetage, ledit bec inférieur (31 ; 31') faisant partie d'une griffe (35 ; 35') admettant une position de service pour la fixation de l'appareil (10 ; 10') sur le rail (20) et une position effacée, pour la libération de l'appareil (10 ; 10') dudit rail (20), dans laquelle la griffe (35 ; 35') est abaissée par rapport à la position de service ; la griffe comportant un chariot (36 ; 36') d'une seule pièce comportant un châssis (50 ; 50') et un cliquet (51 ; 51A, 51 B) présentant en l'absence de sollicitation une position de repos à partir de laquelle il peut fléchir élastiquement, ledit chariot (36 ; 36') étant monté, par ledit châssis (50 ; 50'), coulissant sur le corps de l'appareil (10 ;10') entre une positon haute où la griffe (35 ; 35') est en position de service et une position basse où la griffe est en position effacée, ledit cliquet (51 ; 51A, 51B) et le corps de l'appareil (10 ; 10') étant configurés pour que le chariot (36 ; 36') soit bloqué vis-à-vis du corps de l'appareil (10 ; 10') en position haute lorsque le cliquet (51 ; 51A, 51 B) est en position de repos et pour que le chariot (36 ; 36') soit débloqué vis-à-vis du corps de l'appareil (10 ; 10') lorsque le chariot (36 ; 36') est en position haute et que le cliquet (51 ; 51A, 51 B) est dans une position fléchie, le chariot (36 ; 36') pouvant alors être abaissé jusqu'à sa position basse ;
**caractérisé en ce que** ladite griffe (35, 35') comporte un coulisseau (37 ; 37') distinct du chariot (36 ; 36'), monté coulissant dans ledit chariot (36 ; 36'), l'extrémité supérieure dudit coulisseau (37 ; 37') formant ledit bec inférieur (31 ; 31').

2. Appareil selon la revendication 1, **caractérisé en ce qu'**il comporte un ressort (39 ; 39') distinct du chariot (36 ; 36') et du coulisseau (37 ; 37'), disposé entre ledit coulisseau (37 ; 37') et ledit cliquet (51 ; 51A) du chariot (36 ; 36').

3. Appareil selon la revendication 2, **caractérisé en ce que** ledit coulisseau (37 ; 37') comporte une longrine (61) à laquelle appartient ledit bec inférieur (31) et comporte une tige centrale (63) saillant vers le bas depuis le côté de la longrine (61) opposé audit bec inférieur (31) ; ledit châssis (50 ; 50') comporte une traverse supérieure (53 ; 53A) présentant un passage (68) pour ladite tige centrale (63) du coulisseau (37 ; 37') ; ledit cliquet (51 ; 51A) prend racine sur ladite traverse supérieure (53 ; 53A), à partir de laquelle il s'étend vers le bas ; ledit cliquet (51 ; 51A) comporte une platine (57 ; 57A) et deux joues (58) ayant chacune une extrémité inférieure qui se raccorde à une extrémité supérieure de ladite platine (57 ; 57A) ; et ledit ressort (39 ;39') est disposé entre lesdites joues (58) et s'appuie à son extrémité supérieure sur ladite tige centrale (63) du coulisseau (37 ; 37') et à son extrémité inférieure sur ladite platine (57 ; 57A) du cliquet (51 ; 51 A).

4. Appareil selon la revendication 3, **caractérisé en ce que** ledit cliquet (51 ; 51A) comporte une charnière (59) entre l'extrémité supérieure de chaque dite joue (58) et ladite traverse supérieure (53 ; 53A).

5. Appareil selon l'une quelconque des revendications 1 à 4, **caractérisé en ce que** ledit coulisseau (37 ; 37') comporte une longrine (61) à laquelle appartient ledit bec inférieur (31, 31') et comporte deux bras latéraux (62) saillant vers le bas depuis le côté de la longrine (61) opposé audit bec inférieur (31 ; 31') ; et ledit châssis (50 ; 50') comporte deux membres latéraux (52 ; 52', 120) et une traverse supérieure (53 ; 53A) s'étendant de l'un à l'autre des membres latéraux (52 ; 52', 120) à leur extrémité supérieure, laquelle traverse supérieure (53 ; 53A) présente un passage (69) pour chaque dit bras latéral (62) du coulisseau (37 ; 37').

6. Appareil selon la revendication 5, **caractérisé en ce que** ladite traverse supérieure (53 ; 53A) comporte une platine (64) située à l'arrière et deux équerres (65) comportant chacune une première branche (66) prenant racine sur la platine (64) et une deuxième branche (67) s'étendant entre la première branche (66) et le membre latéral (52 ; 52', 120) le plus proche, chaque dit passage (69) pour un bras latéral (62) respectif étant formé par l'espace entouré par une équerre (65) respective, par le membre latéral (52 ; 52', 120) correspondant et par la platine (64).

7. Appareil selon la revendication 6, **caractérisé en ce que** ledit coulisseau (37 ; 37') comporte une tige centrale (63) saillant vers le bas depuis le côté de la longrine opposée audit bec inférieur (31 ; 31') ; et un espace existant entre les deux équerres (65) formant un passage (68) pour ladite tige centrale (63).

8. Appareil selon l'une quelconque des revendications 1 à 7, **caractérisé en ce que** le corps de l'appareil (10 ; 10') comporte une surface (43) dont saille une patte (48 ; 48A, 48B) allongée suivant la direction horizontale ; et le cliquet (51 ; 51A, 51B) présente au moins un mentonnet (60) en contact avec ladite patte (48 ; 48A ; 48B) pour bloquer ledit chariot (36 ; 36') vis-à-vis du corps de l'appareil (10 ; 10') en position haute lorsque le cliquet (51 ; 51A ; 51 B) est en position de repos.

9. Appareil selon la revendication 8, **caractérisé en ce qu'**un ergot (49 ; 49A, 49B) saille vers l'arrière de ladite patte (48 ; 48A, 48B) ; et ladite griffe (35 ; 35') comporte au moins une patte flexible (90 ; 90A) comportant un cran (91) en contact avec ledit ergot (49 ; 49A, 49B) lorsque le chariot est en position basse.

10. Appareil selon la revendication 9, **caractérisé en ce que** ladite patte flexible (90) appartient audit coulisseau (37).

11. Appareil selon la revendication 9, **caractérisé en ce que** ladite patte flexible (90B) appartient audit châssis (50').

12. Appareil selon l'une quelconque des revendications 1 à 11, **caractérisé en ce que** ledit châssis (50 ; 50') comporte deux flasques latéraux (52 ; 52') ayant chacun une extrémité avant formant une nervure (55 ; 55') longeant une rainure (56 ; 56') ; la nervure (55 ; 55') de chaque flasque latéral (52 ; 52') étant reçu dans une rainure (45 ; 45') du corps de l'appareil (10) tandis que la rainure (56 ; 56') de chaque flasque latéral (52 ; 52') reçoit une nervure (46 ; 46') du corps de l'appareil (10 ; 10').

13. Appareil selon l'une quelconque des revendications 1 à 12, **caractérisé en ce que** ledit châssis (50) comporte deux flasques latéraux (52) avec lesquels ledit coulisseau (37) est en contact.

14. Appareil selon l'une quelconque des revendications 1 à 12, **caractérisé en ce que** ledit châssis (50') comporte deux flasques latéraux (52') et un longeron (120) à mi-distance entre les flasques latéraux (52'), avec ledit coulisseau (37') qui est au contact du longeron et de l'un des flasques latéraux (52').

15. Appareil selon l'une quelconque des revendications 1 à 14, **caractérisé en ce que** ledit cliquet (51 ; 51A, 51B) comporte en partie basse une touche de commande (38 ; 38') située sous le corps de l'appareil (10 ; 10') lorsque la griffe (35 ; 35') est en position de service.

16. Appareil selon l'une quelconque des revendications 1 à 15, **caractérisé en ce que** ledit chariot (36 ; 36') est en matière plastique moulée.

## Patentansprüche

1. Elektrisches Installationsgerät zur Schnappbefestigung auf einer waagerechten Tragschiene (20) mit einem oberen Schenkel (27) und einem unteren Schenkel (28), wobei das Installationsgerät (10; 10') auf einer Rückseite (12) einander gegenüberliegend eine obere Backe (30) und eine unter Backe (31; 31') aufweist, wobei das Installationsgerät (10; 10') zur Befestigung auf einer Schiene (20) ausgebildet ist, wobei der obere Schenkel (27) zwischen die obere Backe (30) und den Körper des Installationsgeräts (10; 10') geklemmt ist und der untere Schenkel (28) zwischen die untere Backe (31; 31') und den Körper des Installationsgeräts (10; 10') geklemmt ist, wobei die untere Backe (31; 31') elastisch einschiebbar ist, um die Befestigung des Installationsgeräts (10; 10') auf der Schiene (20) durch Einrasten zu ermöglichen, wobei die untere Backe (31; 31') zu einer Kralle (35; 35') gehört, die eine Betriebsstellung zur Befestigung des Installationsgeräts (10; 10') auf der Schiene (20) und eine versenkte Stellung zum Lösen des Installationsgeräts (10; 10') aus der Schiene (20) zulässt, in der die Kralle (35; 35') gegenüber der Betriebsstellung nach unten gedrückt ist, wobei die Kralle einen einstückig ausgeführten Schlitten (36; 36') mit einem Rahmen (50; 50') und einer Sperrklinke (51; 51A, 51B) umfasst, die sich bei fehlender Beanspruchung in einer Ruhestellung befindet, von der aus sie elastisch gebogen werden kann, wobei der Schlitten (36; 36') durch den Rahmen (50; 50') auf dem Körper des Installationsgeräts (10; 10') zwischen einer oberen Position, in der sich die Kralle (35; 35') in der Betriebsstellung befindet, und einer unteren Position, in der sich die Kralle in der versenkten Stellung befindet, gleitend gelagert ist, wobei die Sperrklinke (51; 51A, 51B) und der Körper des Installationsgeräts (10; 10') dazu ausgebildet sind, den Schlitten (36; 36') gegenüber dem Körper des Installationsgeräts (10; 10') in der oberen Position zu blockieren, wenn sich die Sperrklinke (51; 51A, 51B) in der Ruhestellung befindet, und den Schlitten (36; 36') gegenüber dem Körper des Installationsgeräts (10; 10') zu lösen, wenn sich der Schlitten (36; 36') in der oberen Position befindet und die Sperrklinke (51; 51A, 51B) sich in einer gebogenen Stellung befindet, wobei der Schlitten (36; 36') dann bis in seine untere Position hinuntergedrückt werden kann,
**dadurch gekennzeichnet, dass** die Kralle (35; 35') einen vom Schlitten (36; 36') getrennten Schieber (37; 37') umfasst, der in dem Schlitten (36; 36') gleitend gelagert ist, wobei das obere Ende des Schiebers (37; 37') die untere Backe (31; 31') bildet.

2. Installationsgerät nach Anspruch 1,
**dadurch gekennzeichnet, dass** es eine vom Schlitten (36; 36') und vom Schieber (37; 37') getrennte Feder (39; 39') umfasst, die zwischen dem Schieber (37; 37') und der Sperrklinke (51; 51A) des Schlittens (36; 36') angeordnet ist.

3. Installationsgerät nach Anspruch 2,
**dadurch gekennzeichnet, dass** der Schieber (37; 37') einen Längsträger (61), zu dem die untere Backe (31) gehört, und einen mittigen Stift (63) umfasst, der von der der unteren Backe (31) abgewandten Seite des Längsträgers (61) aus nach unten vorsteht; der Rahmen (50; 50') einen oberen Querträger (53; 53A) umfasst, der einen Durchlass (68) für den mittigen Stift (63) des Schiebers (37; 37') aufweist; die Sperrklinke (51; 51A) auf dem oberen Querträger (53; 53A) ihren Ausgang nimmt, von dem aus sie sich nach unten erstreckt; die Sperrklinke (51; 51A) eine Platte (57; 57A) und zwei Seitenstücke (58) umfasst, die jeweils ein unteres Ende haben, das mit einem oberen Ende der Platte (57; 57A) verbunden ist; und die Feder (39; 39') zwischen den Seitenstücken (58) angeordnet ist und an ihrem oberen Ende an dem mittigen Stift (63) des Schiebers (37; 37') und an ihrem unteren Ende an der Platte (57; 57A) der Sperrklinke (51; 51A) anliegt.

4. Installationsgerät nach Anspruch 3,
**dadurch gekennzeichnet, dass** die Sperrklinke (51; 51A) zwischen dem oberen Ende eines jeden Seitenstücks (58) und dem oberen Querträger (53; 53A) ein Scharnier (59) aufweist.

5. Installationsgerät nach einem der Ansprüche 1 bis 4,
**dadurch gekennzeichnet, dass** der Schieber (37, 37') einen Längsträger (61), zu dem die untere Backe (31; 31') gehört, und zwei Seitenarme (62) umfasst, die von der der unteren Backe (31; 31') abgewandten Seite des Längsträgers (61) aus nach unten vorstehen; und der Rahmen (50; 50') zwei Seitenteile (52; 52', 120) und einen oberen Querträger (53; 53A) umfasst, der sich zwischen den Seitenteilen (52; 52', 120) an deren oberen Ende erstreckt, wobei der obere Querträger (53; 53A) einen Durchlass (69) für jeden der Seitenarme (62) des Schiebers (37; 37') aufweist.

6. Installationsgerät nach Anspruch 5,
**dadurch gekennzeichnet, dass** der obere Querträger (53; 53A) eine hinten angeordnete Platte (64) und zwei Winkel (65) umfasst, die jeweils einen auf der Platte (64) seinen Ausgang nehmenden ersten Schenkel (66) und einen sich zwischen dem ersten Schenkel (66) und dem nächst gelegenen Seitenteil (52; 52', 120) erstreckenden zweiten Schenkel (67) aufweisen, wobei jeder Durchlass (69) für einen entsprechenden Seitenarm (62) von dem Zwischenraum gebildet ist, der von einem der Winkel (65), dem jeweiligen Seitenteil (52; 52', 120) und der Platte (64) umschlossen ist.

7. Installationsgerät nach Anspruch 6,
**dadurch gekennzeichnet, dass** der Schieber (37; 37') einen mittigen Stift (63) umfasst, der von der der unteren Backe (31; 31') abgewandten Seite des Längsträgers aus nach unten vorsteht; und ein zwischen den beiden Winkeln (65) bestehender Zwischenraum einen Durchlass (68) für den mittigen Stift (63) bildet.

8. Installationsgerät nach einem der Ansprüche 1 bis 7,
**dadurch gekennzeichnet, dass** der Körper des Installationsgeräts (10; 10') eine Fläche (43) aufweist, von der eine längliche Zunge (48; 48A, 48B) in horizontaler Richtung vorsteht; und die Sperrklinke (51; 51A, 51B) wenigstens einen Vorsprung (60) in Kontakt mit der Zunge (48, 48A, 48B) aufweist, um den Schlitten (36; 36') gegenüber dem Körper des Installationsgeräts (10; 10') in der oberen Position zu blockieren, wenn sich die Sperrklinke (51; 51A, 51B) in der Ruhestellung befindet.

9. Installationsgerät nach Anspruch 8,
**dadurch gekennzeichnet, dass** an der Zunge (48; 48A, 48B) ein Zapfen (49; 49A, 49B) nach hinten vorsteht; und die Kralle (35; 35') wenigstens eine flexible Lasche (90; 90A) mit einem Rasthaken (91) umfasst, der mit dem Zapfen (49; 49A, 49B) in Kontakt ist, wenn sich der Schlitten in der unteren Position befindet.

10. Installationsgerät nach Anspruch 9,
**dadurch gekennzeichnet, dass** die flexible Lasche (90) zu dem Schieber (37) gehört.

11. Installationsgerät nach Anspruch 9,
**dadurch gekennzeichnet, dass** die flexible Lasche (90B) zu dem Rahmen (50') gehört.

12. Installationsgerät nach einem der Ansprüche 1 bis 11,
**dadurch gekennzeichnet, dass** der Rahmen (50; 50') zwei Seitenteile (52; 52') umfasst, die jeweils ein vorderes Ende aufweisen, das eine an einer Nut (56; 56') entlanglaufende Rippe (55; 55') bildet; wobei die Rippe (55; 55') eines jeden Seitenteils (52; 52') in einer Nut (45; 45') des Körpers des Installationsgeräts (10) aufgenommen ist, während die Nut (56; 56') eines jeden Seitenteils (52; 52') eine Rippe (46; 46') des Körpers des Installationsgeräts (10; 10') aufnimmt.

13. Installationsgerät nach einem der Ansprüche 1 bis 12,
**dadurch gekennzeichnet, dass** der Rahmen (50) zwei Seitenteile (52) umfasst, mit denen der Schieber (37) in Kontakt ist.

14. Installationsgerät nach einem der Ansprüche 1 bis 12,
**dadurch gekennzeichnet, dass** der Rahmen (50') zwei Seitenteile (52') und einen Längsträger (120) in der Mitte zwischen den Seitenteilen (52') umfasst, wobei der Schieber (37') mit dem Längsträger und einem der Seitenteile (52') in Kontakt ist.

15. Installationsgerät nach einem der Ansprüche 1 bis 14,
**dadurch gekennzeichnet, dass** die Sperrklinke (51; 51A, 51B) im unteren Teil eine Betätigungstaste (38; 38') aufweist, die sich unter dem Körper des Installationsgeräts (10; 10') befindet, wenn die Kralle (35, 35') in der Betriebsstellung ist.

16. Installationsgerät nach einem der Ansprüche 1 bis 15,
**dadurch gekennzeichnet, dass** der Schlitten (36; 36') aus gegossenem Kunststoff ist.

## Claims

1. Electrical appliance to be fixed by snapping onto a horizontal support rail (20) having a top flange (27) and a bottom flange (28), said appliance (10; 10') having on a rear face (12) a top nose (30) and a bottom nose (31; 31') opposite each other, said appliance (10; 10') being configured so as to be fixed to said rail (20) with said top flange (27) engaged between the top nose (30) and the body of the appliance (10; 10') and with said bottom flange (28) engaged between the bottom nose (31; 31') and the body of the appliance (10; 10'), said bottom nose (31; 31') being elastically retractable to enable the appliance (10; 10') to be fixed to the rail (20) by snapping on, said bottom nose (31; 31') forming part of a claw (35; 35') having a service position for fixing the appliance (10; 10') to the rail (20) and a retracted position, for releasing the appliance (10; 10') from said rail (20), in which the claw (35; 35') is lowered with respect to the service position; a carriage (36; 36') in a single piece comprising a chassis (50; 50') and a catch (51; 51A, 51B) having, in the absence of any force, an idle position from which it can flex elastically, said carriage (36; 36') being mounted, by means of said chassis (50; 50'), slidably on the body of the appliance (10; 10') between a top position in which the claw (35, 35') is in the service position and a bottom position in which the claw is in the retracted position, said catch (51; 51A, 51B) and the body of the appliance (10; 10') being configured so that the carriage (36; 36') is locked vis-à-vis the body of the appliance (10; 10') in the top position when the catch (51; 51A, 51B) is in the idle position and so that the carriage (36; 36') is released vis-à-vis the body of the appliance (10; 10') when the carriage (36; 36') is in the top position and the catch (51; 51A, 51B) is in a flexed position, the carriage (36; 36') then being able to be lowered to its bottom position; **characterised in that** said claw (35; 35') comprises a slider (37; 37') distinct from the carriage (36; 36'), mounted slidably in said carriage, the top end of said slider (37; 37') forming said bottom nose (31; 31').

2. Appliance according to claim 1, **characterised in that** it comprises a spring (39; 39') distinct from the carriage (36; 36') and slider (37; 37'), disposed between said slider (37; 37') and said catch (51; 51A) of the carriage (36; 36').

3. Appliance according to claim 2, **characterised in that** said slider (37; 37') comprises a longitudinal bar (61) to which said bottom nose (31) belongs and comprises a central rod (63) projecting downwards from the side of the longitudinal bar (61) opposite to said bottom nose (31); said chassis (50; 50') comprises a top crossmember (53; 53A) having a passage (68) for said central rod (63) of the slider (37; 37'); said catch (51; 51A) is rooted on said top crossmember (53; 53A), from which it extends downwards; said catch (51; 51A) comprises a plate (57; 57A) and two cheeks (58) each having a bottom end that is connected to a top end of said plate (57; 57A); and said spring (39; 39') is disposed between said cheeks (58) and bears at its top end on said central rod (63) of the slider (37; 37') and at its bottom end on said plate (57; 57A) of the catch (51; 51A).

4. Appliance according to claim 3, **characterised in that** said catch (51; 51A) comprises a hinge (59) between the top end of each said cheek (58) and said top crossmember (53; 53A).

5. Appliance according to any one of claims 1 to 4, **characterised in that** said slider (37; 37') comprises a longitudinal bar (61) to which said bottom nose (31; 31') belongs and comprises two lateral arms (62) projecting downwards from the side of the longitudinal bar (61) opposite to said bottom nose (31; 31'); and said chassis (50; 50') comprises two lateral members (52; 52', 120) and a top crossmember (53; 53A) extending from one to the other of the lateral members (52; 52', 120) at the top end (53; 53A) thereof, said top crossmember having a passage (69) for each said lateral arm (62) of the slider (37; 37').

6. Appliance according to claim 5, **characterised in that** the top crossmember (53; 53A) comprises a plate (64) situated at the rear and two angle members (65) each comprising a first branch (66) rooted on the plate (64) and a second branch (67) extending between the first branch (66) and the closest lateral member (52; 52', 120), each said passage (69) for a respective lateral arm (62) being formed by the space surrounded by a respective angle member (65), by the corresponding lateral member (52; 52', 120) and by the plate (64).

7. Appliance according to claim 6, **characterised in that** said slider (37; 37') comprises a central rod (63) projecting downwards from the side of the longitudinal member opposite to said bottom nose (31; 31'); and a space existing between the two angle members (65) forming a passage (68) for said central rod (63).

8. Appliance according to any one of claims 1 to 7, **characterised in that** the body of the appliance (10; 10') comprises a surface (43) from which an elongate tab (48; 48A, 48B) projects in the horizontal direction; and the catch (51; 51A, 51B) has at least one tappet (60) in contact with said tab (48; 48A, 48B) in order to lock said carriage (36; 36') vis-à-vis the body of the appliance (10; 10') in the top position when the catch (51; 51A, 51B) is in the idle position.

9. Appliance according claim 8, **characterised in that** a lug (49; 49A, 49B) projects towards the rear of said tab (48; 48A, 48B); and said claw (35; 35') comprises at least one flexible tab (90; 90A) having a pawl (91) in contact with said lug (49; 49A, 49B) when the carriage is in the bottom position.

10. Appliance according to claim 9, **characterised in that** said flexible tab (90) belongs to said slider (37).

11. Appliance according to claim 9, **characterised in that** said flexible tab (90B) belongs to said chassis (50').

12. Appliance according to any one of claims 1 to 11, **characterised in that** said chassis (50; 50') comprises two lateral shields (52; 52') each having an end forming a rib (55; 55') running along a groove (56; 56'); the rib (55; 55') of each lateral shield (52; 52') being received in a groove (45; 45') in the body of the appliance (10) while the groove (56; 56') in each lateral shield (52; 52') receives a rib (46; 46') on the body of the appliance (10; 10').

13. Appliance according to any one of claims 1 to 12, **characterised in that** said chassis (50) comprises two lateral shields (52) with which said slider (37) is in contact.

14. Appliance according to any one of claims 1 to 12, **characterised in that** said chassis (50') comprises two lateral shields (52') and a longitudinal member (120) halfway between the lateral shields (52'), with said slider (37') in contact with the longitudinal member and one of the lateral shields (52')

15. Appliance according to any one of claims 1 to 14, **characterised in that** said catch (51; 51A, 51B) comprises at the bottom part a control key (38; 38') situated under the body (10; 10') of the device when the claw (35; 35') is in the service position.

16. Appliance according to any one of claims 1 to 15, **characterised in that** said carriage (36; 36') is made from moulded plastics material.
